(19) Europäisches Patentamt
European Patent Office
Office européen des brevets

(11) **EP 4 560 870 A1**

(12) **EUROPEAN PATENT APPLICATION**

(43) Date of publication:
**28.05.2025 Bulletin 2025/22**

(21) Application number: **23212132.7**

(22) Date of filing: **24.11.2023**

(51) International Patent Classification (IPC):
***H02J 3/36*** *(2006.01)* ***H02J 3/26*** *(2006.01)*
***H02M 7/493*** *(2007.01)*

(52) Cooperative Patent Classification (CPC):
**H02J 3/36; H02J 3/26; H02M 7/493**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **General Electric Technology GmbH**
**5400 Baden (CH)**

(72) Inventors:
- **JASIM, Omar**
  **ST16 1WS Stafford (GB)**
- **KUMAR, Amit**
  **ST16 1WS Stafford (GB)**
- **MATH, Kiran Kumar**
  **201304 Noida (IN)**
- **SARVEPALLI, Jyothi**
  **ST16 1WS Stafford (GB)**

(74) Representative: **Openshaw & Co.**
**8 Castle Street**
**Farnham, Surrey GU9 7HR (GB)**

(54) **IMPROVEMENTS RELATING TO POWER SHARING IN BIPOLE POWER TRANSMISSION NETWORKS**

(57) There is provided a method (400) of controlling a bipole power transmission network. The method (400) comprises receiving (410) a command for synchronising the first and second AC networks; measuring (420) a first AC bus voltage of the first AC bus and a second AC bus voltage of the second AC bus, the measured AC bus voltages being defined by voltage magnitudes and phase angles; adjusting (430) a phase angle and a magnitude of a voltage of at least one of the first and second power converters based on the measured AC bus voltages; issuing (440) a command to electrically connect the first AC bus with the second AC bus using the electrical connection means, when: a first phase angle difference of the first and second AC bus voltages is within a first predefined range; and a first magnitude difference of the first and second AC bus voltages is within a second predefined range; and changing (450) the phase angle of the voltage of at least one of the first and second power converters to balance the power between the first and second electrical poles.

400
410
420
430
440
450

Figure 4

EP 4 560 870 A1

## Description

Field

The subject matter herein relates generally to the field of power transmission networks and more specifically to power sharing in bipole power transmission networks.

Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e. power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

For a windfarm interconnection bipole HVDC power transmission network, the two poles of the bipole HVDC power transmission network can be fed through independent wind power parks. The independent wind power parks may produce different power outputs owing to, for instance, differences in wind density in the vicinity of the wind power parks. This can result in an unbalanced power flow between the two poles causing a current, resulting from the unbalance, to flow through a neutral arrangement of the bipole power transmission network.

Summary

In bipole power transmission networks, particularly those connected to windfarms, the neutral arrangement typically comprises a dedicated metallic return conductor for accommodating unbalanced current flow during normal operation of the bipole HVDC power transmission network. However, in case of a loss or fault of the DMR conductor, or indeed another fault condition arising with the neutral arrangement, the HVDC power transmission scheme may need to be switched to operate as a rigid bipole i.e., with one station grounded or with both stations grounded. In either rigid bipole mode, unbalanced current is not able to flow through the neutral arrangement (i.e., dedicated current return path) and so tends to flow to ground.

It is undesirable to have excessive unbalanced current flowing to ground at least from a safety perspective. For instance, excessive unbalanced current flowing to ground can cause voltage changes or differentials across the ground. Furthermore, excessive current flowing to ground may cause damage to electrical components in the ground path and can cause corrosion in any buried steel structure. It is therefore necessary to minimise any current flowing to ground to below a threshold value, or ideally zero, and as quickly as possible. This requires a current balancing to be performed between the two poles of the bipole power transmission network.

Hence, it is desirable to provide a control method and controller for a bipole power transmission network, that mitigates these issues.

According to a first aspect of the invention, there is provided a computer implemented method of controlling a bipole power transmission network, the bipole power transmission network comprising a first power conversion means comprising first and second power converters having respective first and second alternating current (AC) sides and respective first and second (DC) sides, a second power conversion means comprising third and fourth power converters having respective third and fourth AC sides and third and fourth DC sides, a first power transmission means electrically connected between the first and third DC sides and defining a first electrical pole, a second power transmission means electrically connected between the second and fourth DC sides and defining a second electrical pole, and a neutral arrangement electrically connected between the first, second, third and fourth DC sides, wherein the first and second AC sides of the first and second power converters are electrically connected to respective first and second AC networks via respective first and second AC buses, the first and second AC buses being electrically connectable to one another using an electrical connection means, the method comprising: receiving a command for synchronising the first and second AC networks; measuring a first AC bus voltage of the first AC bus and a second AC bus voltage of the second AC bus, the measured AC bus voltages being defined by voltage magnitudes and phase angles; adjusting a phase angle and a magnitude of a voltage of at least one of the first and second power converters based on the measured AC bus voltages; issuing a command to electrically connect the first AC bus with the second AC bus using the electrical connection means, when: a first phase angle difference of the first and second AC bus voltages is within a first pre-defined range; and a first magnitude difference of the first and second AC bus voltages is within a second pre-defined range; and changing the phase angle of the voltage of at least one of the first and second power converters to balance the power between the first and second electrical poles.

The invention disclosed herein tends to provide a control methodology for achieving power sharing during an automatic transition in circuit configuration for bipole schemes, with minimum current flowing in the neutral/ground path. More specifically, the invention disclosed herein proposes a control method to facilitate the automatic sequence for transition between a bipole with a DMR to a bipole without a DMR.

For a bipole power transmission network, it is generally preferred not to reduce or affect incoming generated power from, for instance, a windfarm. In this respect, the source of incoming generated power is considered as a source feeding fixed power, which is accepted by the bipole power transmission network. The invention described herein provides a control approach for managing unbalanced power during any condition that requires operating the bipole power network in a balanced power mode such as for e.g., during fault conditions with the neutral arrangement i.e., when the DMR is not available. The approach does not require adjusting the incoming AC power from the source of generated power (a windfarm) and does not require adjustment of the DC voltages in the bipole power transmission network.

The first and second AC buses are electrically connectable using electrical connection means. Such an electrical connection means may be one or more bus couplers, transformers and/or any other switchgear. Preferable the electrical connection means comprises one or more bus sectionalisers, that during normal operation of the bipole power transmission network, isolate the AC buses associated with independent AC network (i.e., windfarm) connection. The inventors have realized that if the bus sectionaliser can be utilized to help balance power during a fault condition with the neutral arrangement of the bipole power transmission network, from a power converter perspective, each power converter of a respective electrical pole will 'see' the same AC power (i.e., will be sharing the same AC input). However, and as discussed herein, it cannot be guaranteed that prior to closing the one or more bus sectionalisers, the AC bus voltages of the first and second AC buses, will be the same (as the first and second AC buses are connected, in-use, to separate and independent AC network sources). Closing the one or more bus sectionalisers to provide a common AC bus may therefore result in significant current flow across the one or more bus sectionalisers owing to the voltage differential between the first AC bus and second AC bus. The inventors have shown that synchronizing the first and second AC bus voltages, prior to closing the one or more bus sectionalisers, mitigates this particular issue. Moreover, the inventors have shown that this can be achieved by applying a phase angle step change on either the first or second power converters. By way of example, the phase angle step change may be applied to the converter whose corresponding AC bus voltage (or put differently, transformer line winding voltage) is lagging with respect to the other converter. The phase angle step change can achieve synchronization of the first and second AC bus voltages quickly, which mitigates the change propagating and being detected at the AC network which is feeding power to the bipole power transmission scheme. This is important given that such AC networks (including windfarms) generally monitor network changes over a relatively slower duration and can reduce fed power accordingly. A reduction in fed power is undesirable from both an AC network and power transmission network perspective.

The inventors have further realized that whilst applying a first phase angle step change can synchronise the first and second AC bus voltages (the line winding voltages), and enable the one or more bus sectionalisers to be closed, the active powers at first and second electrical poles may remain unbalanced and/or the first and second AC voltages (i.e., the valve winding voltages) of the first and second converters may be unsynchronised. Hence, after closing the one or more bus sectionalisers, the second phase angle step change is necessarily applied to either the first or second power converter, to oppose the first phase angle step change, and bring the first and second power converters back into synchronization, to share the fed power from what is now a common AC bus. This, further synchronization enables the first and second power converters to share the input AC power equally and balance the currents flowing in the first and second electrical poles to prevent any circulation of power within the first and second power transmission means, such that any unbalanced current flowing to the neutral arrangement is minimized. It will be understood that the synchronization disclosed herein relates to synchronizing at least the phase angles of the power converters.

Whilst in some scenarios, the magnitudes of the first and second AC bus voltages may be the same, this cannot be guaranteed. Having magnitudes of the respective AC buses that are unequal can lead to excessive current flow through bus sectionaliser at the time of closing, which is not desirable. Hence, it is preferable ensure the voltage magnitudes are synchronized.

In some embodiments, the step of adjusting a phase angle and a magnitude of a voltage of at least one of the first and second power converter comprises: applying a first phase angle step change for a first time period (T1) to the voltage of either the first or second converter to reduce the first phase angle difference of the first and second AC bus voltages; and adjusting the magnitude of the voltage of at least one of the first and second power converters to reduce the first magnitude difference of the first and second AC bus voltages.

In some embodiments, the applying a first phase angle step change comprises: determining the first phase angle difference of the first and second AC bus voltages; determining the first time period (T1) based on the first phase angle difference and a first frequency shift; and applying the first frequency shift to a nominal frequency of the first and second AC networks for the first time period; wherein the first time period (T1) is determined according to Equation 1 below.

$$T_1 = \left(\frac{1}{F_{set1}}\right) * \left(\frac{\delta_{change1}}{360}\right) \qquad \text{Equation 1}$$

wherein $F_{set1}$ is the first frequency shift which can be pre-defined and $\delta_{change1}$ is the first phase angle difference, wherein the first phase angle difference is a difference between the phase angles of the first and second AC bus voltages.

In some embodiments, the first phase angle step change is a positive phase angle change applied to the voltage of the power converter that is connected to the bus that has a lagging voltage phase angle with respect to the other bus; or the first phase angle step change is a negative phase angle change applied to the voltage of the power converter that is connected to the bus that has a leading voltage phase angle with respect to the other bus. In some embodiments, the changing the phase angle of the voltage of at least one of the first and second power converters to balance the power between the first and second electrical poles comprises: applying a second phase angle step change for a second time period (T2) to the voltage of either the first or second power converter to reduce a second phase angle difference, wherein the second phase angle difference is a difference between the phase angles of the first and second converter AC voltages.

In some embodiments, the applying a second phase angle step change comprises: determining the second phase angle difference; determining the second time period (T2) based on the second phase angle difference and a second frequency shift; and applying the second frequency shift to the nominal frequency of the first and second AC networks for the second time period; wherein the second time period (T2) is determined according to Equation 2 below.

$$T_2 = \left(\frac{1}{F_{set2}}\right) * \left(\frac{\delta_{change2}}{360}\right) \qquad \text{Equation 2}$$

wherein '$F_{set2}$' is the second frequency shift which can be pre-defined and $\delta_{change2}$ is the second phase angle difference. It should be noted that $F_{set2}$ can be set to a higher value compared to $F_{set1}$ so as to achieve zero neutral current faster.

Equations 1 and 2 provide calculations that can be relatively easily implemented in the control methods (i.e., control algorithms) in controllers for bipole power transmission networks. Furthermore, Equations 1 and 2 allow for a smooth phase angle step change to be applied at the VCO of the relevant converter/s without disturbing the AC network (i.e., windfarm) feeding power to the power transmission network.

In some embodiments, the second phase angle step change is in an opposite direction to the first phase angle step change. For example, if the first step change is positive then the second step change would be negative.

In some embodiments the changing the phase angle of the voltage of at least one of the first and second power converters to balance the power between the first and second electrical poles comprises: determining a phase angle shift value according to Equation 3 below.

$$\delta_{shift} = \sin^{-1}\left\{\frac{\left(\frac{P_{diff}}{2}\right) * X}{V_1 * V_2}\right\} \qquad \text{Equation 3}$$

and then applying the determined phase angle shift value to the voltage of one of the first and second power converters; wherein: $P_{diff}$ is a difference between a first active power of the first electrical pole and a second active power of the second electrical pole prior to electrically connecting the first AC bus with the second AC bus, 'X' is a total loop reactance between the first and second power converters, and 'V1' and 'V2' are the magnitudes for the first and second AC bus voltages produced by the first and second power converters after electrically connecting the first and second AC buses.

Equation 3 allows, instead of measuring phase angles directly, for it to be possible to determine a phase angle difference required to synchronise the first and second power converters, partially by using measurements made on the DC side of the converters. The phase angle shift value of Equation 3 may be applied directly or in the form of a step change. For applying the phase angle shift value as a step change, the second phase angle difference of Equation 2 is made equal to the determined phase angle shift value.

Some embodiments further comprise: controlling the first and/or second power converters to maintain a common neutral electrical current flowing in the neutral arrangement to be substantially zero, by applying a closed loop frequency shift to the nominal frequency of the first and/or second power converters, wherein the closed loop frequency shift is determined based on one of the following: a first DC current in the first electrical pole and a second DC current in the second electrical pole; a third current flowing through a grounding circuit associated with the first power conversion means; or the phase angles of AC voltages on the first and second AC sides of the respective first and second power converters and converter voltage demands determined by constant AC voltage control of the first and second power converters.

Unbalanced current flowing to the neutral arrangement may need to be minimized. It is preferential to maintain the unbalanced current to be minimized (i.e., zero) beyond the initial open loop change in phase angle, in a more 'closed-loop' manner. By controlling the first and second converters to regulate the first AC voltage and/or second AC voltage in this regard, a closed-loop bipole balancing function is maintained.

In some embodiments, the command for synchronising the first and second AC networks is received in the event of at least one of: a fault or failure associated with a dedicated metallic return conductor (DMR) of the neutral arrangement; a fault or failure associated with one or more switchgear of the neutral arrangement; a fault or failure associated with one or more power converters or one or more power transmission means; initiation of a configuration transition sequence (i.e., transitioning from bipolar to monopolar configuration); identification of a requirement to connect the first and second AC buses; identification of a requirement to start the bipole power transmission network without the dedicated metallic return conductor (DMR) of the neutral arrangement; and initiation of a sequence for testing the bipole power transmission network (i.e., during commissioning for carrying out round power operation mode).

The invention described herein tends to be applicable to scenarios where a fault condition arises with a neutral arrangement meaning neutral currents are not permitted to flow as they would do, under normal operation, through the neutral arrangement. Failure or faults with DMR or switchgear, could result in unbalanced currents instead flowing to ground. Additionally, it may be necessary to reduce unbalanced currents where such currents would exceed tolerances of components on the neutral arrangement, or if components of the neutral arrangement are out of service for servicing purposes.

In some embodiments, at least one of the first and second power converters is configured to operate in a grid forming mode.

In some embodiments the bipole power transmission network is a high voltage direct current (HVDC) power transmission network. The present disclosure provides control methods that are particularly applicable to HVDC power transmission networks.

In some embodiments, the respective AC networks are wind power generation networks. The present disclosure provides control methods for minimizing unbalanced current during a fault condition of the neutral arrangement of a bipole power transmission network. Unbalanced current can arise particularly when interconnecting windfarms, which may be providing differing AC powers to the HVDC power transmission network.

Generally, the first and second nominal frequencies of the first and second power converters may be the AC frequency, i.e., 50Hz that is controlled by a voltage controller oscillator (VCO). In embodiments applying the first and second frequency shifts, said frequency shifts may be the same frequency shift or different frequency shifts. For instance, the first frequency shift may be 2Hz and the second frequency shift 3Hz. By controlling the first or second power converters to apply the first frequency shift to the nominal frequency for the first time period, the first or second power converter may operate at a higher or lower AC frequency for the first time period. For instance, the first power converter may operate, temporarily, at 50+2Hz = 52Hz. This tends to result in the first AC bus voltage phase angle, which may be lagging the second AC bus voltage phase angle, to become synchronized with the second AC bus voltage phase angle. Then, after the closure of the at least one bus sectionaliser, the second frequency shift is applied to the nominal frequency (i.e., 50Hz) of the first power converter to balance the active powers between the first and second power converters. This tends to provide a relatively quick synchronization of the first and second AC bus voltages, and then, the first and second AC voltages.

In some embodiments, the measurement of phase angles may be performed using phase measurement units or modules. Similarly, in some embodiments the measurement of voltages and/or currents may be performed using voltage and/or current measurement units or modules.

In some embodiments, the electrical connection means is at least one bus sectionaliser that is operated from a non-conducting state to the conducting state in which the first and second AC buses are electrically connected. This may comprise, prior to operating the at least one bus sectionaliser, measuring a difference in phase angle between the first and second AC bus voltages and comparing the difference in phase angle to a predefined value or range of values (i.e., +/- 0.01 degrees). The at least one bus sectionaliser may then be operated once the difference in phase angle is equal to, below, or within the predefined value or range of values. This tends to mitigate unnecessary delays in applying, for instance, the second phase angle step change, owing to communication delays in the closure of the one or more bus sectionalisers. In even more preferred embodiments, one or more grounding switches of the neutral arrangement may also be operated from a non-conductive state to a conductive state to provide a ground return path, at the same time as closing the at least one bus sectionaliser.

Some embodiments comprise operating one or more switchgear of the neutral arrangement, from a conducting state to a non-conducting state, after applying the second phase angle step change. The switchgear may be referred to as 'MRTB's and isolate a DMR. Hence the DMR could be removed or serviced whilst still allowing the bipole power transmission network to operate.

According to a second aspect of the invention, there is provided a controller for controlling a bipole power transmission network, the controller comprising: at least one memory; and at least one processor; wherein the at least one memory comprises computer-readable instructions which when executed by the at least one processor cause the controller to perform the method of the first aspect of the invention. The controller may comprise one or more sub-controllers or supplementary controllers, or may comprise a single controller, performing the methods described herein.

According to a third aspect of the invention, there is provided a bipole power transmission network comprising: a first power conversion means comprising: first and second power converters having respective first and second AC sides and respective first and second DC sides; a second power conversion means comprising: third and fourth power converters having respective third and fourth AC sides and third and fourth DC sides; a first power transmission means electrically connected between the first and third DC sides and defining a first electrical pole; a second power transmission means electrically connected between the second and fourth DC sides and defining a second electrical pole; a neutral arrangement electrically connected between the first, second, third and fourth DC sides; wherein the first and second AC sides of the first and second converters are electrically connected to respective first and second AC networks via respective first and second AC buses, the AC buses being electrically connectable using an electrical connection means; wherein the bipole power transmission network further comprises the controller of the second aspect of the invention.

According to a fourth aspect of the invention, there is provided a computer program comprising instructions which when executed by a processor of a controller for a bipole power transmission network, cause the controller to perform the method of the first aspect of the invention.

According to a fifth aspect of the invention, there is provided a non-transitory computer-readable storage medium comprising the computer program of the fourth aspect of the invention.

It will be appreciated that particular features of different aspects of the invention share the technical effects and benefits of corresponding features of other aspects of the invention. More specifically, the controller, bipole power transmission network, computer program, non-transitory computer-readable medium, share the technical effects and benefits of the computer-implemented method of the invention.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

## Brief description of the drawings

Embodiments of the invention will now be described by way of example only and with reference to the accompanying drawings, in which:

Figure 1 shows generically, an example of a power transmission network;
Figure 2 shows an embodiment of a controller according to aspects of the disclosure herein;
Figure 3A shows an embodiment of a bipole power transmission network in normal operation, according to aspects of the disclosure herein;
Figure 3B shows an embodiment of a bipole power transmission network during a fault condition, according to aspects of the disclosure herein;
Figure 4 shows an embodiment of a method of controlling a bipole power transmission network;
Figure 5 shows a further embodiment of a method of controlling a bipole power transmission network;
Figure 6 shows an example of constant AC voltage control, in accordance with aspects of the disclosure herein;
Figure 7 shows an example of phase angle step changes, in accordance with aspects of the disclosure herein;
Figure 8 shows an example of bipole phase angle control with power balancing functionality, in accordance with aspects of the disclosure herein;
Figure 9 shows a further example of bipole phase angle control with power balancing functionality, in accordance with aspects of the disclosure herein; and
Figure 10 shows an example of bipole AC voltage magnitude control, in accordance with aspects of the disclosure herein.

## Detailed description

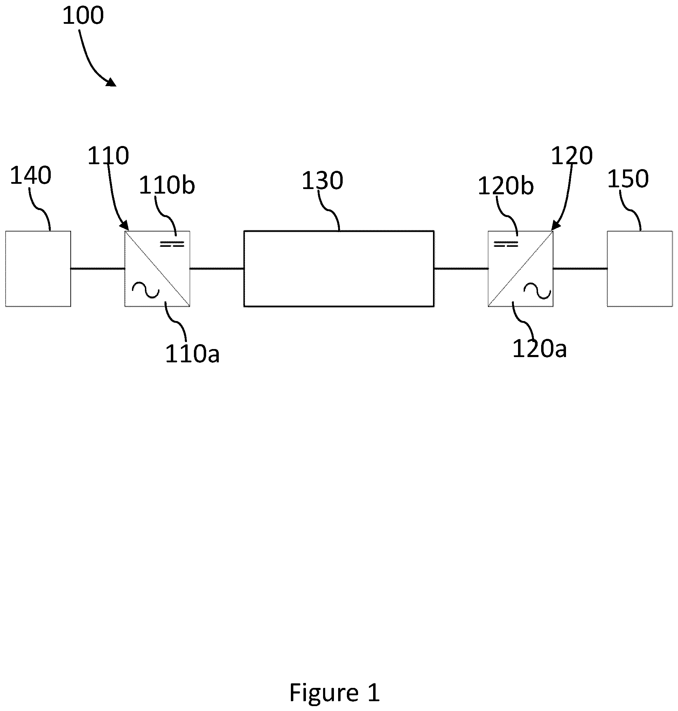

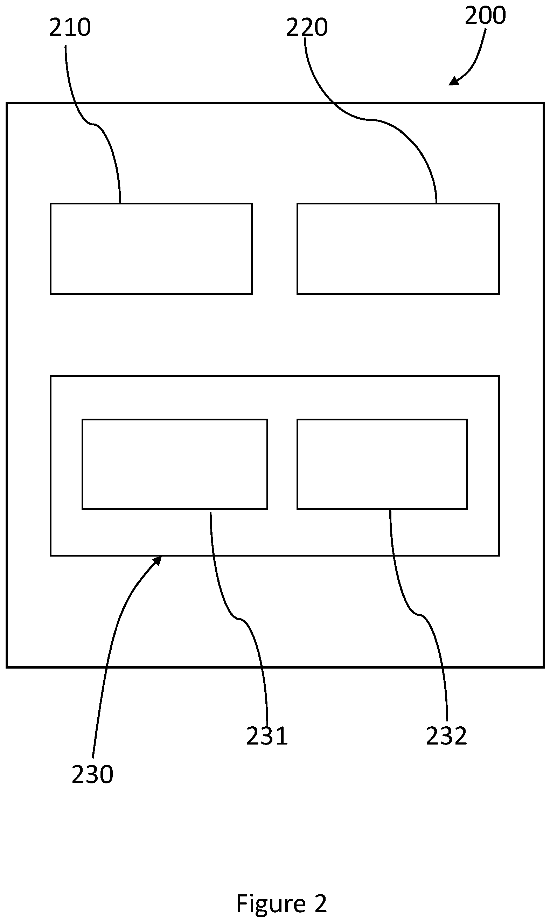

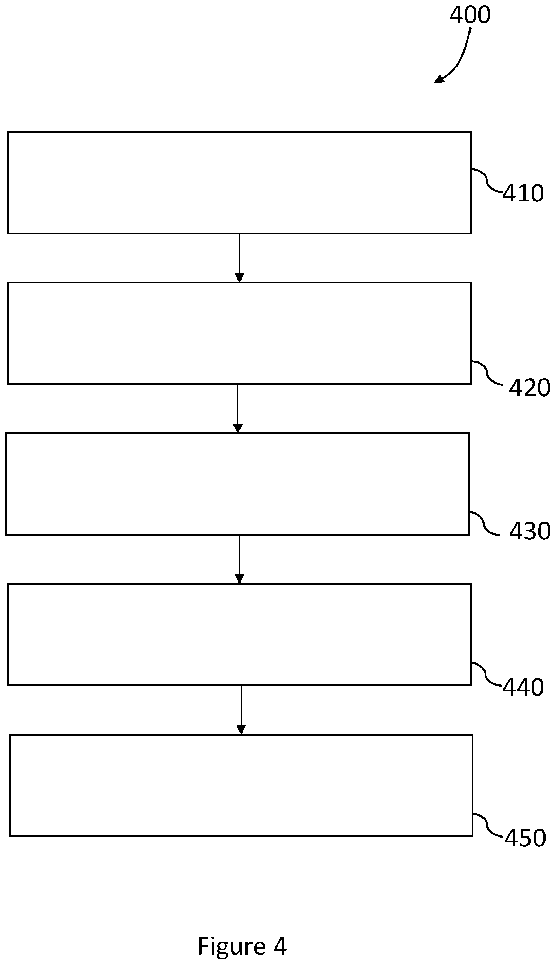

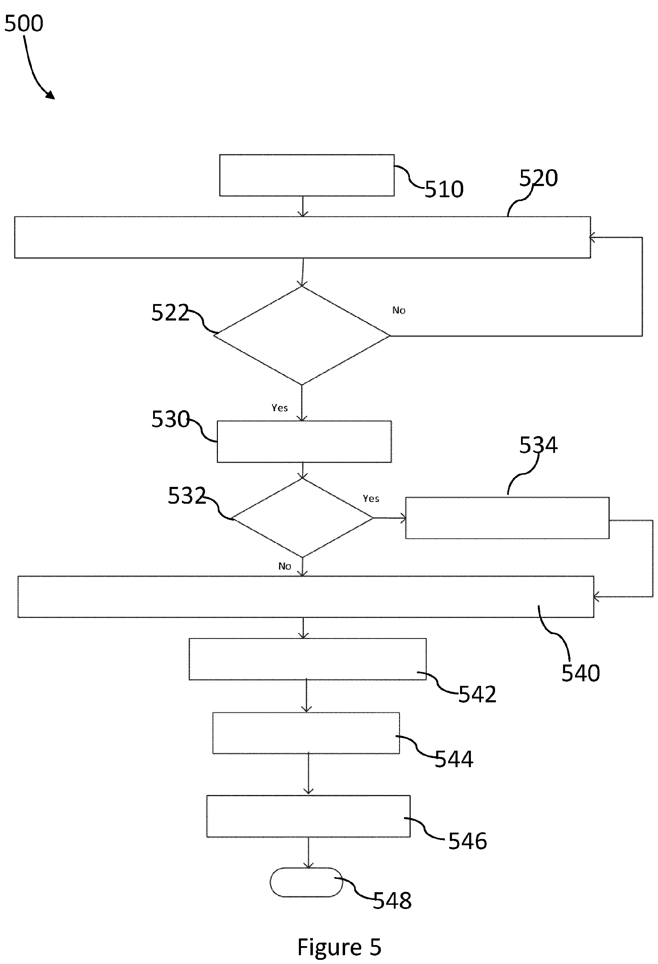

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the methods described herein, such as the methods 400 and 500 of Figures 4 and 5 may be performed in a network such as the network 100.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is illustrated as being connected to a first AC network 140. The first AC network 140 is illustrated as being connected to the first AC side 110a of the first power conversion means 110.

The second power conversion means 120 is illustrated as being connected to a second AC network 150. The second AC network 150 is illustrated as being connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. The first AC network 140 or second AC network 150 may each comprise a plurality of networks. By way of non-limiting example, the first AC network 140 may be a power generation network, with second AC network 150 being a consumer network, for instance. The first AC network 140 may comprise multiple wind power generation networks, respectively connected to independent AC buses to which respective converters of the first power conversion means 110 are connected.

Also illustrated is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from first DC side 110b over the power transmission medium 130 to the second DC side 120b of second power conversion means 120. The second power conversion means 120 converts the received DC power back to an AC power. The AC power is then provided from second AC side 120a to second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or ‘armouring’ in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as grid forming or synchronous grid forming (SGFM) wherein either or both of the power conversion means 110, 120 behave as three-phase, positive-phase sequence AC voltage sources behind an impedance, that operate at a frequency synchronous with other SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is illustrated as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not illustrated, the controller 200 may additionally include a user input device interface and/or a user output device interface, which may allow for visual, audible or haptic inputs/outputs. Examples include interfaces to electronic displays, touchscreens, keyboards, mice, speakers and microphones.

The controller 200 illustrated may itself be one of a plurality of controllers 200 implementing the invention described here. For instance, a plurality of supplementary controllers 200 may implement the invention described herein, as part of a broader control means, or a single controller 200 may implement the invention described herein.

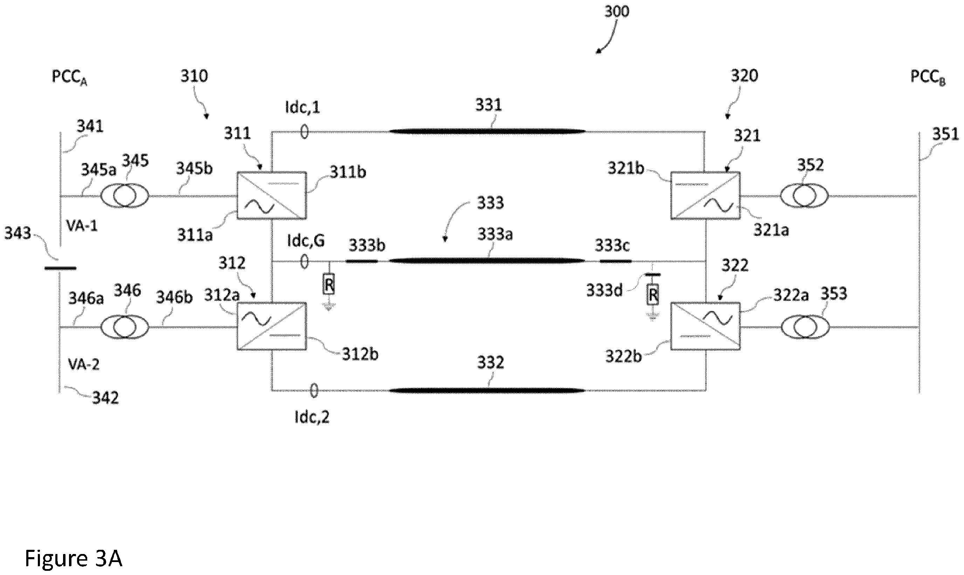

Figure 3A shows an embodiment of a bipole power transmission network 300 in normal operation.

The bipole power transmission network 300 comprises a first power conversion means 310 comprising first and second power converters 311, 312. The first power converter 311 has a first AC side 311a and a first DC side 311b. The second power converter 312 has a second AC side 312a and a second DC side 312b.

The bipole power transmission network 300 also comprises a second power conversion means 320 comprising third and fourth power converters 321, 322. The third power converter 321 has a respective third AC side 321a and a third DC side 321b. The fourth power converter 322 has a respective fourth AC side 322a and fourth DC side 322b.

A first power transmission means 331 is electrically connected between the first and third DC sides 311b, 321b and defines a first electrical pole. The first power transmission means 331 is electrically connected to pole terminals of the DC sides 311b, 321b. A second power transmission means 332 is electrically connected between the second and fourth DC sides 312b, 322b and defines a second electrical pole. The second power transmission means 332 is electrically connected to pole terminals of the DC sides 312b, 322b.

A neutral arrangement 333 is electrically connected between the first, second, third and fourth DC sides 311b, 312b, 321b, 322b. The neutral arrangement 333 is electrically connected to a neutral terminal on the DC sides 31 1b, 312b, 321b, 322b. The neutral arrangement 333 comprises a DMR 333a with switchgear 333b, 333c, arranged either side of the DMR 333a for isolating the DMR 333a if required. The switchgear 333b, 333c are in the closed or conducting state. Also present on the neutral arrangement 333 is a grounding switch 333d. The grounding switch 333d may be considered to be located at the on-shore side of the power transmission network 300.

The first and second AC sides 311a, 312a, of the first and second converters 311, 312, are electrically connected to respective AC networks (not visible) via respective first and second AC buses 341, 342 the AC buses 341, 342 being electrically separated by at least one bus sectionaliser 343 configured in a non-conducting state. The AC networks are offshore windfarms. Hence, the first and second converters 311, 312 may be considered to be located at an offshore side of the power transmission network 300.

Also shown in the power transmission network 300 are transformers 345, 346 having respective line winding sides 345a, 346a and valve winding sides 345b, 346b.

The third and fourth converters 321, 322 are further shown as being connected, at the AC sides 321a, 322a, to a further AC bus 351 via transformers 352, 353. The further AC bus 351 is for connecting to a further AC network (not visible).

Points of common connection are illustrated as $PCC_A$ on the offshore side and $PCC_B$ on the onshore side, of the bipole power transmission network 300. The person skilled in the art would be familiar with other components illustrated in the network 300, such as points of measurement for current and voltage, resistors, ground points etc.

During normal operation of the bipole power transmission network 300, the first and second converters 311, 312 are fed AC power from independent windfarms/wind power parks that are connected to independent AC buses 341, 342. The AC buses 341, 342 are independent because the bus sectionalisers 343 are in an open or non-conducting state. The independent windfarms may produce AC power outputs that differ, depending on wind density in the vicinity of the respective windfarms. This can result in an unbalanced power flow between the first and second power transmission means 331, 332 (the two electrical poles). This causes an unbalanced current to flow through the neutral arrangement 333. More specifically, the unbalanced current flow flows through the DMR 333a of the neutral arrangement 333.

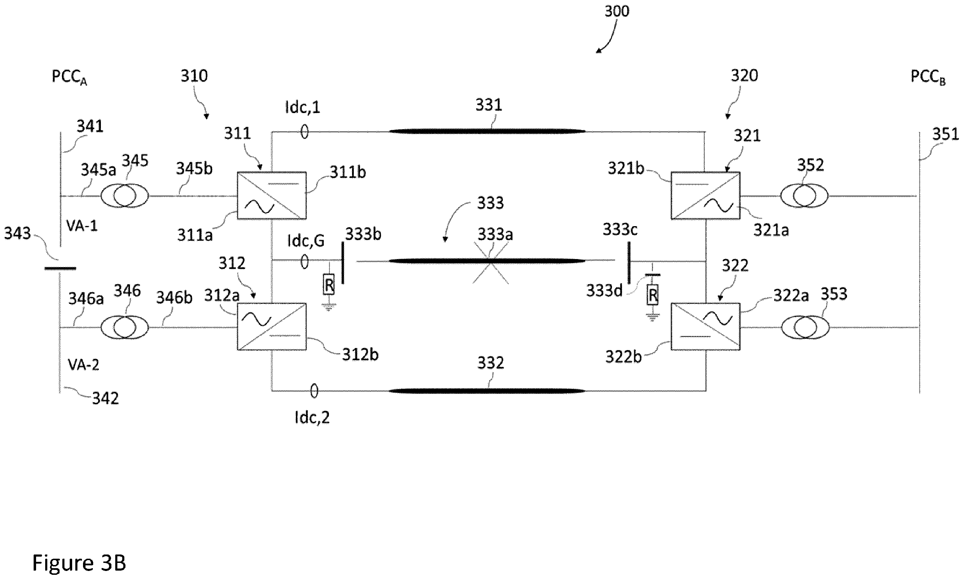

Figure 3B shows the embodiment of the bipole power transmission network 300 of Figure 3A, during a fault condition. The fault condition is that the DMR 333a inoperable, with the respective switchgear 333b and 333c now in an open or non-conducting state to isolate the DMR 333a. The grounding switch 333d has been operated to a closed or conducting state, allowing unbalanced current (resulting from unbalanced power from the windfarms feeding the network 300) that would otherwise flow through the DMR 333a, to now flow to ground. Furthermore, the bus sectionaliser 343 has been closed, electrically connecting the first and second AC buses 341, 342 to effectively form a common AC bus from the perspective of converters 311, 312. As illustrated, the bipole power transmission network 300 is in a rigid bipole configuration.

In the rigid bipole power transmission network 300 shown in Figure 3B, it is necessary to reduce any unbalanced current flowing to ground via switch 333d. Hence a current balancing operation is required between the two poles of the network 300. The solution described herein provides a control method to facilitate the automatic sequence for transitioning between bipole with DMR present (i.e., as per Figure 3A) to bipole without DMR present (i.e., as per Figure 3B).

Figure 4 shows an embodiment of a method 400 of controlling a bipole power transmission network.

A first step 410 comprises, receiving a command for synchronizing the first and second AC networks.

A further step 420 comprises measuring a first AC bus voltage of the first AC bus 341 and a second AC bus voltage of the second AC bus 342, the measured AC bus voltages being defined by voltage magnitudes and phase angles.

A further step 430 comprises adjusting a phase angle and a magnitude of a voltage of at least one of the first and second power converters 311, 312 based on the measured AC bus voltages.

A further step 440 comprises, issuing a command to electrically connect the first AC bus 341 with the second AC bus 342 using the electrical connection means 343, when: a first phase angle difference of the first and second AC bus voltages is within a first pre-defined range; and a first magnitude difference of the first and second AC bus voltages is within a second pre-defined range.

A further step 450 comprises, changing the phase angle of the voltage of at least one of the first and second power converters 311,312 to balance the power between the first and second electrical poles.

The method 400 may be a computer implemented method operable by one of more processors of one or more controllers, such as the controller 200 of Figure 2. The method 400 may therefore be embodied as computer code, for instance in a non-transitory computer readable storage medium, separate to or as part of a controller 200.

Figure 5 shows a further exemplary embodiment of a method 500 of controlling a bipole power transmission network 300.

A first step 510 comprises, receiving a command for synchronising the first and second AC networks. More specifically, the first step 510 comprises initiating the automatic sequence once a DMR 333a fault is detected.

A further step 520 comprises measuring a first AC bus voltage of the first AC bus 341 and a second AC bus voltage of the second AC bus 342, the measured AC bus voltages being defined by voltage magnitudes and phase angles; and adjusting a phase angle and a magnitude of a voltage of at least one of the first and second power converters 311, 312 based on the measured AC bus voltages. More specifically the adjusting the phase angle comprises applying a first phase angle step change to the voltage of either the first or second power converters 311, 312. More specifically, the further step 520 comprises starting the synchronization of the two AC buses 341, 342 by changing the converter voltage angles and magnitude based on the line-winding-side 345a, 346a voltage measurements. The step 520 may therefore involve measuring the phase angle/s by using a phase measurement unit (PMU) for the line winding side voltages. The offshore line winding voltages may have different phase and magnitude, because of independent pole operation, hence, before closing the bus sectionaliser 343 there is a need to synchronize the line winding side voltages. One approach to achieve synchronization could be to have a first phase angle step change applied as a positive phase angle step change on the converter 311, 312 whose phase angle of line winding voltage is lagging with respect to the other. Also, the magnitude of the line winding voltage of the lagging AC system can be used to be synchronized to the AC voltage measured of the other.

A further step 522 comprises determining whether a measured phase angle difference and a magnitude difference between the first and second AC bus voltages are less than a predefined value or within a range of small-predefined values. After applying the phase step change and voltage magnitude adjustment, once the measured phase angle difference and voltage magnitude difference are within the predefined small values, a close command to the bus sectionaliser 343 can be issued.

A further step 530 comprises issuing a command to electrically connect the first AC bus 341 with the second AC bus 342 using the at least one bus sectionaliser 343, when: a first phase angle difference of the first and second AC bus voltages is within a first pre-defined range; and a first magnitude difference of the first and second AC bus voltages is within a second pre-defined range. Put differently, the further step 530 comprises issuing a close command to the bus sectionalisers 343.

An optional further step 532 comprises determining if both onshore and offshore sides of network 300 require grounding.

An optional further step 534 comprises closing the grounding switch 333d at the onshore side of the bipole power transmission network 300.

A further step 540 comprises, changing the phase angle of the voltage of at least one of the first and second power converters 311, 312 to balance the power between the first and second electrical poles. The changing comprises controlling at least one of the first and second converters 311, 312, to adjust the respective first or second AC voltages such that the active power of the first electrical pole is substantially close to that of the second electrical pole and/or a first electrical current flowing in the neutral arrangement 333 is substantially zero. This is done by applying a second phase angle step change to a voltage of the first or second power converters 311, 312, wherein the second phase angle step change may oppose the first phase angle step change. More specifically, the further step 540 comprises starting the power balancing between two poles by changing the converter voltage angles based on valve-winding-side 345b, 346b voltage measurements. The first phase step change applied to synchronise the line winding side 345a, 346a causes valve winding side 345b, 346bvoltages to lead by the same amount as the phase angle step change applied to synchronize the line winding side 345a, 346a. This phase lead in the phase of the valve winding side 345b, 346b voltages must be withdrawn immediately (by using open loop and/or closed loop phase angle regulation as will be explained herein), once the bus sectionaliser 343, closes, to avoid any circulation of power (round power) within the DC link 331, 332, 333, etc, of the transmission network 300. By performing the second power balancing step 540, the power will be shared equally between the converters 311, 312 and the electrical poles of the network 300.

To eliminate unnecessary delays in withdrawal of the phase step change due to communication delays in receiving the bus sectionaliser 343, closed status, the phase difference between line winding side 345a, 346a voltages is monitored to check, if it is within a small, predefined range of values (e.g. +/- 0.01 degrees) which is sufficient to determine that the bus sectionaliser 343 is closed. The negative phase step change is applied to bring back the converter valve winding phasor in synchronization immediately after the bus sectionaliser 343 is closed.

A further optional step 542 comprises controlling the first and/or second power converters 311, 312 to maintain a common neutral electrical current flowing in the neutral arrangement to be substantially zero, by applying a closed loop frequency shift to the nominal frequency of the first and/or second power converters 311, 312, so as to operate the two poles of the bipole power network 300 in a balanced power mode. A closed loop bipole power balancing function may be a function of the neutral electrical current in the neutral arrangement 333 ('Idc, G' in Figures 3A-3B, or the difference of 'Idc,1' and 'Idc,2' in Figures 3A-3B), in order to achieve the common neutral current (Idc,N + Idc,G) to be zero (or below a threshold). Alternatively the closed loop function may use the phase angle difference between the measured converter voltages (the first and second converter AC voltages, for instance). Alternatively the demand voltages, determined by the constant AC voltage control of both poles, may be used.

A further optional step 544 comprises opening the switchgear (333b, 333c), also known as MTRBs' to isolate the DMR 333a.

A further optional step 546 comprises operating the bipole power network 300 without the DMR 333a established.

The method 500 then ends 548.

Aspects of the methods for achieving synchronization of voltages of the AC buses 341, 342 (also referred to as line winding side voltages), will now be described.

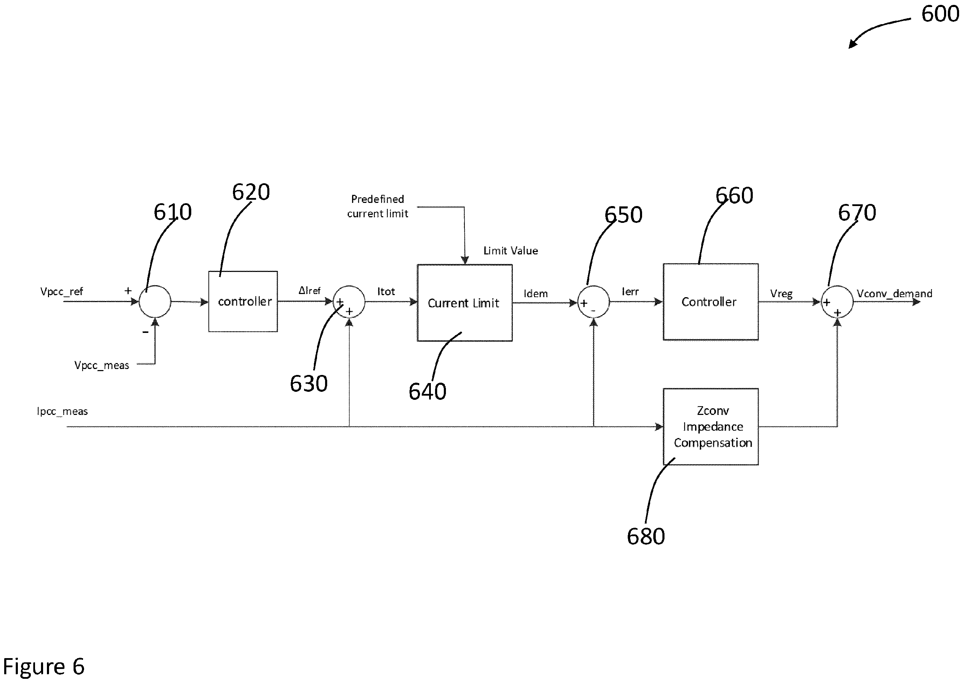

At least one of the converters 311, 312 (i.e., the converters at the offshore side of the power transmission network 300) may operate in a grid forming mode. In the grid forming mode the converters 311, 312, provide constant AC voltage control to regulate AC voltage magnitude and frequency. Figure 6 shows an example of constant AC voltage control 600, in accordance with aspects of the disclosure herein. The constant AC voltage control 600 can be used to regulate the voltage magnitude and frequency at the first and second AC buses 341, 342. The control logic of the constant AC voltage control 600, with current limiting, will now be described.

At a first junction 610, a voltage reference value for a point of common connection for an AC bus 341 or 342, 'Vpcc_ref, is combined with a measured voltage value at the point of common connection 'Vpcc_meas'. The first junction 610 determines the difference between the reference and measured voltage values. This difference is provided to a controller 620.

The controller 620 generates a current adjustment reference value, 'ΔIref' which is combined, at a second junction 630, with a current value measured at the point of common connection, 'Ipcc_meas'. The second junction 630 adds the current adjustment reference value to the measured current value to determine a total required current value 'Itot'. The total required current value is provided to a current limiter 640.

The current limiter 640 receives the total required current value and a predefined current limit value. The current limiter 640 outputs a demand current value 'Idem' which may be the total required current value 'Itot' or, if 'Itot' exceeds the current limit value, the current limit value.

A third junction 650 then receives the demand current value 'Idem' and the measured current value 'Ipcc_meas'. The third junction 650 determines a difference between the determined current value and measured current value, which is output as a current error value 'Ierr'. The current error value is provided to a second controller 660.

The second controller 660 generates a regulated voltage value 'Vreg' from the current error value 'Ierr'. This is provided to a fourth junction 670.

An impedance compensation 680 is applied to the measured current value 'Ipcc_meas' which is then also provided to the fourth junction 670. The impedance compensation 680 relating to the impedance of the given converter (i.e., 311, 312).

The fourth junction 670 combines the regulated voltage value 'Vreg' and the input from the impedance compensation 680 to provide a converter voltage demand value 'Vconv_demand'.

As disclosed herein, the synchronization of the two independent electrical poles of a bipole power transmission network, to achieve power sharing, can be achieved by minimising the difference between the phase angle of the first and second AC bus voltages (i.e., the voltages at the point of common connection of the first and second AC buses). This can be achieved using what are referred to herein as open loop and/or closed loop control.

In the open-loop control method, the phase angles are synchronized initially but are not then regulated thereafter. One such approach is to apply a first positive phase angle step change by determining a first frequency shift on the power converter whose phase angle of line winding voltage is lagging with respect to that corresponding to the other power converter. This is performed prior to closure of the bus sectionalisers between the AC buses. It is desirable that the open loop control achieves a smooth phase angle step change that can be applied at the VCO of the converter corresponding to the lagging AC bus voltage, without disturbing the power generation network feeding the bipole scheme (i.e., the windfarms). This is achieved by calculating the duration of the first positive phase angle step change for a first frequency shift to be applied to a first nominal frequency of the converter on which the corresponding AC bus voltage is lagging. Using Equation 1 previously discussed herein, Equation 4 below can be obtained for the first time period 'T1' for which the first frequency shift is applied to synchronise the phase angles of the first and second AC bus voltages (line-winding side voltages).

$$T_1 = \left(\frac{1}{F_{set1}}\right) * \left(\frac{(|\delta_{1-vlw}| - |\delta_{2-vlw}|)}{360}\right) \qquad \text{Equation 4}$$

wherein '$F_{set1}$' is the first frequency shift, ($|\delta_{1-vlw}| - |\delta_{2-vlw}|$) is the first phase angle difference between the measured phase angles of the first and second AC bus voltages (i.e., of the line-winding-side voltages). By way of example, Fset1 is a predefined value such as 2Hz which can be added to the first nominal frequency such as 50Hz, for the duration T1. This will form the combined frequency input of the VCO of the converter whose corresponding AC bus voltage is lagging in phase angle, in order to bring about synchronisation of the first and second AC bus voltages prior to closure of the bus sectionaliser.

Following closure of the bus sectionaliser, the power converters 311, 312, will require a further synchronization in respect of their first and second AC voltages (valve winding side voltages) given the previously introduced first phase angle step change. Hence, a second phase angle step change can be applied in a similar manner to the first phase angle step change. In this respect, and using Equation 2, the second time period 'T2' of the second phase angle step change can be expressed using Equation 5.

$$T_2 = \left(\frac{1}{F_{set2}}\right) * \left(\frac{(|\delta_{1-vvw}| - |\delta_{2-vvw}|)}{360}\right) \quad \text{Equation 5}$$

wherein '$F_{set2}$' is a second frequency shift, ($|\delta_{1\text{-}vvw}|$ - $|\delta_{2\text{-}vvw}|$) is a second phase angle difference between the first and second AC voltages (i.e., valve winding side voltages) of the first and second power converters 311, 312. Hence, the second frequency shift, such as 2Hz, can be applied to the second nominal frequency of 50Hz, for the time duration T2. This is the combined frequency input to the VCO controlling the converter (in this instance, the second frequency shift is applied as a negative shift). The second phase angle step change may be applied in an opposite direction to oppose the first phase angle step change (i.e., a negative phase angle step change)

It should be noted that the phase angle difference in Equation 5, does not necessarily require calculation by direct measurement of the phase angles for the first and second AC voltages on the valve winding side. It is possible to determine the phase angle difference, or put differently, the magnitude of the change in angle required to perform the power balancing, from the knowledge of the active power prior to closure of the bus sectionalisers. The active power may be based on DC or AC measurements (Vdc, Idc, Vac or Iac for instance). Presuming that the first synchronization has been successful and the first and second AC bus voltages are synchronized (the line winding side voltages are synchronized), a record or measurement can be made of the DC power of the first and second electrical poles (for instance the DC power on power transmission means 331 and 332 of Figures 3A-3B). This can be achieved by DC voltage and current measurements. The difference between the DC powers of the electrical poles can therefore be calculated. This process is expressed in Equations 6-8.

$$P_{dc\,\mathbf{1}} = V_{dc1R} * I_{dc1} \quad \text{Equation 6}$$

$$P_{dc\,2} = V_{dc2R} * I_{dc2} \quad \text{Equation 7}$$

$$P_{diff} = P_{dc\,\mathbf{1}} - P_{dc\,2} \quad \text{Equation 8}$$

wherein $P_{dc\,1}$, $V_{dc1R}$, and $I_{dc1}$, are the DC power, voltage and current of the first electrical pole, $P_{dc\,2}$, $V_{dc2R}$, and $I_{dc2}$, are the DC power, voltage and current of the second electrical pole, and $P_{diff}$ is the difference in DC power.

Then, once the closed status of the one or more bus sectionalisers is confirmed, the magnitude of the change in phase angle required to perform the power balancing can be calculated in accordance with Equation 3 hereinbefore discussed. Alternatively, if the phase angle change has been applied directly, then the magnitude thereof may be calculated using Equation 3. It may also be the case that the phase angle change determined from Equation 3 can be substituted in place of the 'second phase angle difference' of Equation 5 to apply the second phase angle step change.

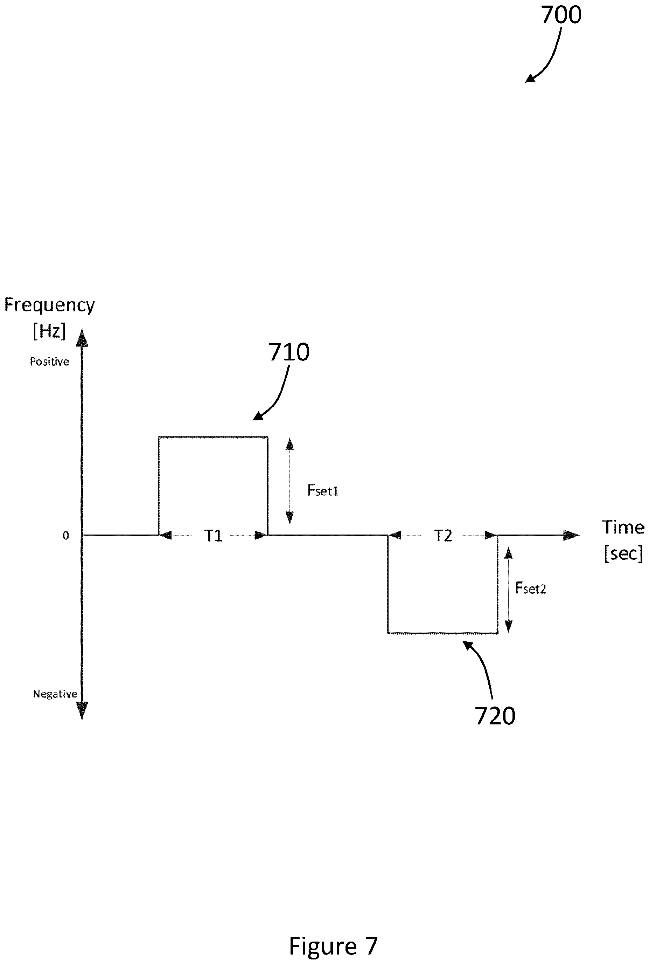

Figure 7 shows an example 700 of first 710 and second 720 phase angle step changes in accordance with aspects of the disclosure herein. More specifically the example 700 reflects the open loop calculation hereinbefore discussed for the frequency shifts to achieve smooth phase angle step changes to be applied at the VCO of the power converter corresponding to the originally lagging AC bus voltage.

The first phase angle step change 710 is applied by applying a first frequency shift Fset1 for the time duration T1, as hereinbefore discussed with regard to Equations 1 and 4. The first phase angle step change 710 is applied to the VCO corresponding to the converter whose corresponding AC bus voltage is lagging (i.e., whose line winding side voltage is lagging).

The second phase angle step change 720 is applied by applying a second frequency shift Fset2 for the time duration T2, as hereinbefore discussed with regard to Equations 2 and 5. The second phase angle step change 720 is applied to the VCO corresponding to the VCO of the converter based on the first and second AC voltages (i.e., converter AC voltages) after the closure of the bus sectionaliser/s.

The application of the first and second phase angle step changes 710, 720, provides an initial synchronization of a bipole power transmission network when transitioning to a 'rigid bipole' for instance owing to a fault condition with a DMR of the neutral arrangement. This initial synchronization may be considered as 'open loop' control. It is preferable to also implement a continuing 'closed loop' control of the synchronization between electrical poles of the bipole power transmission network in a rigid bipole configuration. This can be achieved by implementing a closed loop bipole power balancing function. For instance, the closed loop bipole power balancing function may use a measured neutral current (i.e.,

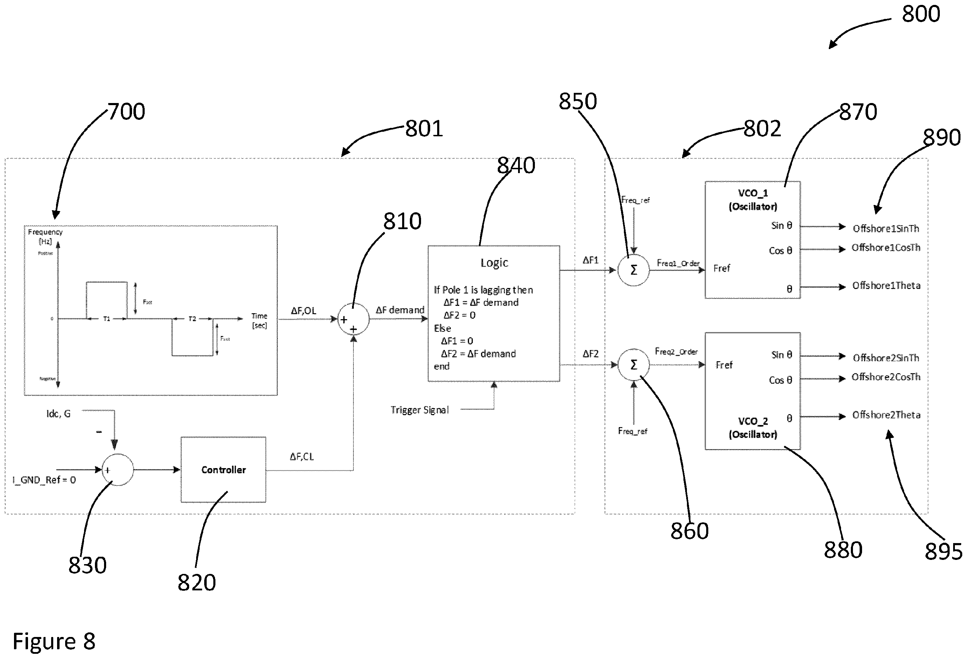

$I_{dc, N}$ and $I_{dc, G}$ in Figure 3B) directly, or, a difference between respective DC electrical currents on the poles (i.e., $I_{dc, 1}$ and $I_{dc, 2}$), and regulating them to zero or below a predefined value. The closed loop power balancing function may achieve this by applying a further 'trim' signal determined by the closed loop function and applied to the frequency shift/frequency demand input to the VCO of the relevant converter. This control logic is shown in Figure 8.

Figure 8 shows an example 800 of bipole phase angle control with power balancing functionality, in accordance with aspects of the disclosure herein. For convenience, aspects of control 801 for bipole balancing are indicated separate to VCO control 802.

The control logic 800 shows that the example 700 of phase angle step changes of Figure 7 are provided as open loop frequency shifts, 'ΔF,OL' to a first junction 810. The first junction 810 also receives as an input, closed loop frequency shifts, 'ΔF, CL' from first controller 820. The closed loop frequency shifts, 'ΔF, CL' may be considered as the 'trim' signal hereinbefore described. The closed loop frequency shifts, 'ΔF, CL' from first controller 820 may be generated as a function of a neutral current, $I_{dc, G}$ relative to a reference 'I_GND-Ref (i.e., zero), as received from a second junction 830. The first junction 810 combines the open and closed loop frequency shifts, 'ΔF, OL' and 'ΔF, CL', to provide a combined frequency shift or demand, 'ΔF demand', which is input to a logic unit 840.

The logic unit 840 receives a 'trigger signal' to indicate when the synchronization and current balancing process is to begin. The trigger signal may relate to a determination of a fault with a DMR conductor, for instance. The logic unit 840, upon receiving the trigger signal, applies logical steps as will now be described.

If the logic unit 840 determines that a first electrical pole is lagging in phase angle with respect to the other electrical pole, then a frequency shift 'ΔF1' for a first power converter of the first electrical pole is set to be the 'ΔF demand'. The frequency shift 'ΔF2' for the other power converter of the second electrical pole is set to be zero.

If the logic unit 840 determines otherwise i.e., that the first electrical pole is not lagging in phase angle with respect to the other electrical pole, then a frequency shift 'ΔF1' for the first power converter of the first electrical pole is set to be zero. The frequency shift 'ΔF2' for the other power converter of the second electrical pole is set to be the 'ΔF demand'. It should be noted that in other exemplary embodiments, ΔF1 and ΔF2 may be set in opposite directions.

The respective frequency shifts 'ΔF1' and 'ΔF2' are provided by logic unit 840 to respective third and fourth junctions 850, 860, wherein they are combined with respective nominal frequency references, 'Freq_ref'. The nominal frequency references may be 50Hz, for instance.

Output from the third and fourth junctions 850, 860, are the frequency orders for the VCOs for respective power converters. For instance, a frequency order 'Freq1_Order' is output from third junction 850 and provided as the reference frequency for a first VCO 870. Accordingly, a frequency order 'Freq2_Order' is output from fourth junction 860 and provided as the reference frequency for a second VCO 880. The respective VCOs 870, 880, generate respective sets of outputs 890, 895 for their respective offshore converters (for instance converters 311, 312 of Figure 3A-3B).

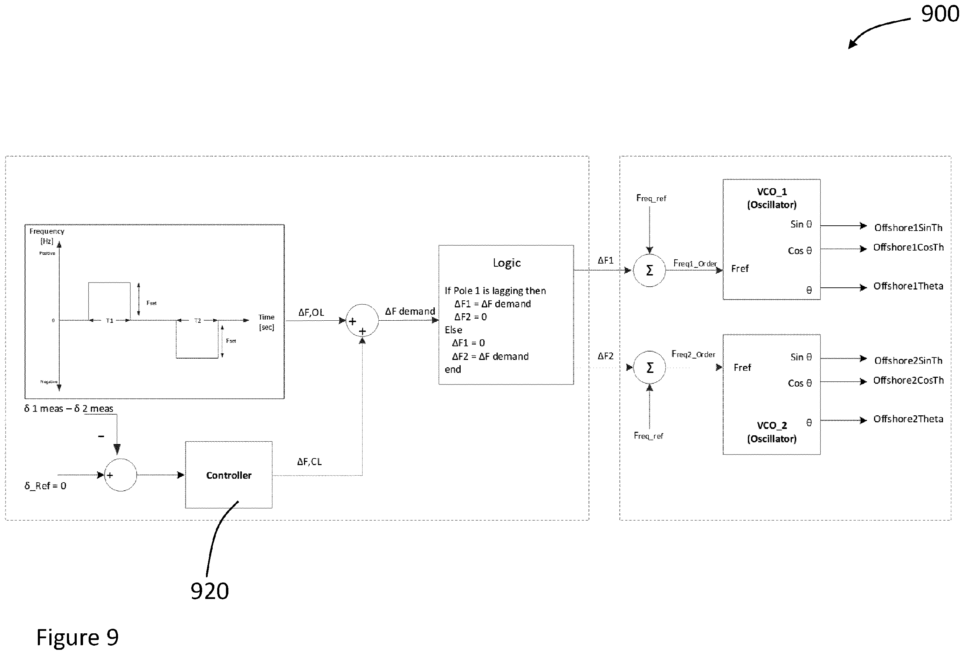

As an alternative solution, it is possible to use the difference of the phase angle of the first and second AC voltages (i.e., at the valve-winding-side) as the measurement for the closed loop bipole power balancing function instead of a neutral current measurement. This is shown in Figure 9.

Figure 9 shows a further example 900 of bipole phase angle control with power balancing functionality, in accordance with aspects of the disclosure herein. More specifically, the example 900 of Figure 9 can be considered the same as the example 800 of Figure 8, with the exception of the input to first controller 920.

Whilst the function of controller 920 may be considered the same as that of controller 820 of Figure 8, the controller 920 is instead receiving a measured phase angle difference 'δ 1 meas - δ 2 meas' relative to a reference 'δ_Ref = 0' (i.e., zero), as an input. This is contrasted with the controller 820 of Figure 8 which receives a current (relative to a reference) as an input.

As a further alternative to the examples 800, 900 of Figures 8 and 9, the converter voltage demand determined by constant AC voltage control of both electrical poles may be used to regulate the DC neutral current and achieve power balancing.

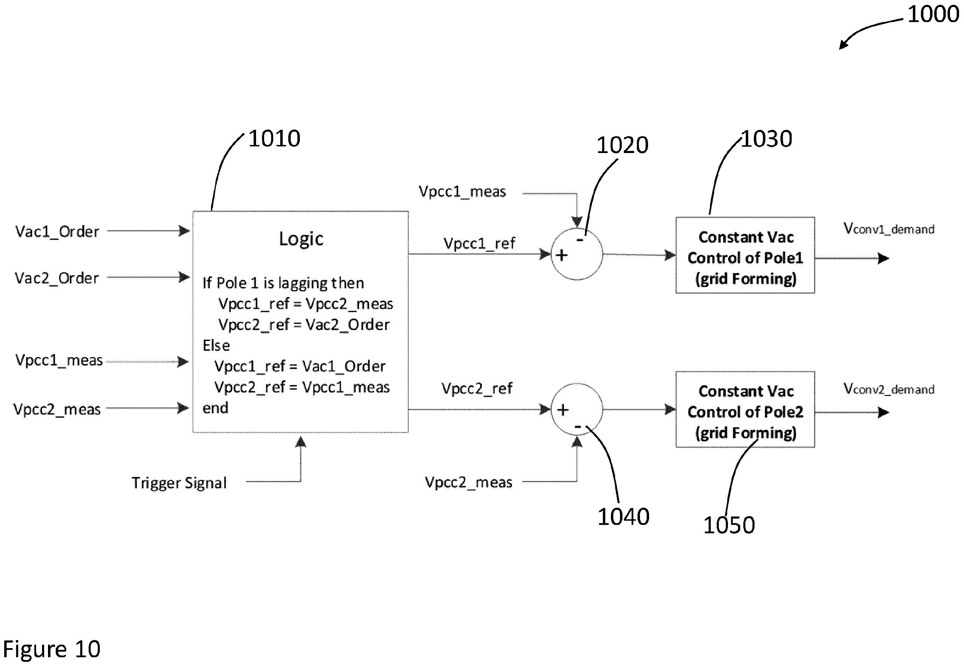

Whilst the preceding examples have described the synchronization of phase angles of AC voltages, it may also be necessary to synchronise AC voltage magnitudes between the electrical poles of a bipole power transmission network. An example of bipole AC voltage magnitude control for offshore converters (i.e., first converter 311 and second converter 312 of Figure 3) will now be described with reference to Figure 10.

Figure 10 provides an example 1000 of AC voltage magnitude control for offshore converters.

In the example 1000, a logic unit 1010 receives as inputs AC voltage orders 'Vac1_order' and 'Vac2_order'. Also received by logic unit 1010 are measured first and second AC bus voltages (i.e., line winding side voltages) measured at the point of common connection for the AC buses. These are 'Vpcc1_meas' and 'Vpcc2_meas' respectively. The logic unit 1010 provides logical processing of the inputs to generate two voltage reference values.

More specifically, if a first AC bus voltage magnitude is lagging with respect to the other AC bus voltage magnitude, then a first reference value for the first AC bus voltage, 'Vpcc1_ref' is set to be the measured second AC bus voltage (i.e., Vpcc2_meas). In addition, a second reference value for the second AC bus voltage, 'Vpcc2_ref' is set to be the AC voltage order, Vac2_order.

However, if a first AC bus voltage magnitude is not lagging with respect to the other AC bus voltage magnitude, then the first reference value is set as Vac1_order, and the second reference value is set as Vpcc1_meas.

The first reference value Vpcc1_ref for the first AC bus voltage is provided to a first junction 1020, where it is combined with the measured first AC bus voltage Vpcc1_meas. The first junction 1020 outputs the difference between the first reference value and measured first AC bus voltage, to a constant AC voltage control unit 1030 for converter control. The constant AC voltage control unit 1030 generates a first converter voltage demand, 'Vconv1_demand'.

The second reference value Vpcc2_ref for the second AC bus voltage is provided to a second junction 1040, where it is combined with the measured second AC bus voltage Vpcc2_meas. The second junction 1040 outputs the difference between the second reference value and measured second AC bus voltage, to a constant AC voltage control unit 1050 for converter control. The constant AC voltage control unit 1050 generates a second converter voltage demand, 'Vconv2_demand'.

The example 1000 also includes a trigger signal for logic unit 1010.- It will be understood that the control units 1030, 1050 may be configured to operate in a grid forming mode.

Whilst the embodiments described herein may refer to 'line winding side' and 'valve winding side', it will be understood that such terms are well known in the art. Regardless, such terms are used with reference to transformers connecting converters to respective AC buses. The line winding side is the side of the transformer that connects to the AC network feeding power to the AC bus. The valve winding side is the side of the transformer that connects to the power converters. By making AC voltage adjustments at the converter, a corresponding effect can be induced at the line winding side. It should be noted that the first and second AC bus voltages tend to be used interchangeably with line winding side voltage, and first and second AC voltages tend to be used interchangeably with valve winding side voltage.

The invention described herein tends to have the advantage of providing a control method for operating a bipole scheme during a transition from a bipole scheme with a DMR to a bipole scheme without a DMR. The invention tends to allow for synchronization of phase angle before, during and after the transition, and tends to allow for open and/or closed loop power balancing between the electrical poles of a bipole scheme, whilst minimizing current in the neutral arrangement (or flowing to earth).

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a voltage source converter (VSC) HVDC scheme, comprising a plurality of poles and a plurality of converters, the plurality of poles including at least one positive pole, at least one negative pole and a neutral pole. The scheme is initially configured in bipole with a neutral return conductor in service, the positive and negative poles are connected to independent AC buses and operated independently. Preferably, at least one of the pole converters is in a voltage/frequency (V/F) control mode which defines the voltage and frequency reference of the AC network. A controller with a pre-programmed protective sequence initiates an automatic sequence to reconfigure the bipole scheme in the event of fault in the neutral return conductor. The automatic protective sequence detects the neutral return conductor faults and instruct a supplementary controller to the synchronization of the two independent AC buses by changing the phase angle of the converter(s) in V/F control mode, and also reconfigures the DC circuit in bipole without neutral return conductor configuration, wherein the scheme further includes a supplementary controller programmed to regulate the converters output power in opposite direction when the current flowing through the ground return path is non-zero (or above a threshold). The controller is programmed to change the 'V_ref as a function the current through ground return path and/or voltage at neutral and minimise it to an acceptable limit.

The disclosure herein further provides a VSC HVDC scheme, comprising a plurality of poles and a plurality of converters, the plurality of poles including at least one positive pole, at least one negative pole and a neutral pole. The scheme is normally configured in bipole with return conductor in service, two poles are connected to independent AC buses and operated independently. Preferably, both the pole converters are in V/F control mode which define the voltage and frequency reference of the AC network. This is to allow the faster synchronization of the two converter AC buses, when power balancing of two converters is to be achieved, i.e., in the event of neutral conductor faults. A supplementary controller with a pre-programmed protective sequence initiates an automatic sequence to close the bus-sectionaliser in the event of a fault in the neutral return conductor. The automatic protective sequence detects the neutral return conductor faults and instructs the controller to issue a close command to the bus-sectionaliser and initiate a change in one of the converters angles to balance the two poles when the bus-sectionaliser is closed. Wherein the converter scheme further includes a supplementary controller programmed to regulate the converters output power when the current flowing through the ground return path is non-zero (or above a threshold). The controller is programmed to change the voltage reference 'V_ref' as a function the current through ground return path and/or voltage at neutral and minimise it to an acceptable limit.

## Claims

1. A computer-implemented method of controlling a bipole power transmission network, the bipole power transmission network comprising a first power conversion means comprising first and second power converters having respective first and second alternating current 'AC' sides and respective first and second 'DC' sides, a second power conversion means comprising third and fourth power converters having respective third and fourth AC sides and third and fourth DC sides, a first power transmission means electrically connected between the first and third DC sides and defining a first electrical pole, a second power transmission means electrically connected between the second and fourth DC sides and defining a second electrical pole, and a neutral arrangement electrically connected between the first, second, third and fourth DC sides, wherein the first and second AC sides of the first and second power converters are electrically connected to respective first and second AC networks via respective first and second AC buses, the first and second AC buses being electrically connectable to one another using an electrical connection means, the method comprising:

    receiving a command for synchronising the first and second AC networks;
    measuring a first AC bus voltage of the first AC bus and a second AC bus voltage of the second AC bus, the measured AC bus voltages being defined by voltage magnitudes and phase angles;
    adjusting a phase angle and a magnitude of a voltage of at least one of the first and second power converters based on the measured AC bus voltages;
    issuing a command to electrically connect the first AC bus with the second AC bus using the electrical connection means, when:

        a first phase angle difference of the first and second AC bus voltages is within a first pre-defined range; and

a first magnitude difference of the first and second AC bus voltages is within a second pre-defined range; and

changing the phase angle of the voltage of at least one of the first and second power converters to balance the power between the first and second electrical poles.

**2.** The computer-implemented method of claim 1, wherein the step of adjusting a phase angle and a magnitude of a voltage of at least one of the first and second power converter comprises:

applying a first phase angle step change for a first time period ‘T1’ to the voltage of either the first or second converter to reduce the first phase angle difference of the first and second AC bus voltages; and
adjusting the magnitude of the voltage of at least one of the first and second power converters to reduce the first magnitude difference of the first and second AC bus voltages.

**3.** The computer implemented method of claim 2 wherein the applying a first phase angle step change comprises:

determining the first phase angle difference of the first and second AC bus voltages;
determining the first time period ’T1’ based on the first phase angle difference and a first frequency shift; and
applying the first frequency shift to a nominal frequency of the first and second AC networks for the first time period;
wherein the first time period ’T1’ is determined according to the following equation:

$$T_1 = \left(\frac{1}{F_{set1}}\right) * \left(\frac{\delta_{change1}}{360}\right)$$

wherein $F_{set1}$ is the first frequency shift which can be pre-defined and $\delta_{change1}$ is the first phase angle difference, wherein the first phase angle difference is a difference between the phase angles of the first and second AC bus voltages.

**4.** The computer-implemented method of any one of claims 2-3 wherein:

the first phase angle step change is a positive phase angle change applied to the voltage of the power converter that is connected to the bus that has a lagging voltage phase angle with respect to the other bus; or
the first phase angle step change is a negative phase angle change applied to the voltage of the power converter that is connected to the bus that has a leading voltage phase angle with respect to the other bus.

**5.** The computer-implemented method of any one of claims 2-4 wherein changing the phase angle of the voltage of at least one of the first and second power converters to balance the power between the first and second electrical poles comprises:
applying a second phase angle step change for a second time period ‘T2’ to the voltage of either the first or second power converter to reduce a second phase angle difference, wherein the second phase angle difference is a difference between the phase angles of the first and second converter AC voltages.

**6.** The computer implemented method of claim 5 wherein the applying a second phase angle step change comprises:

determining the second phase angle difference;
determining the second time period ‘T2’ based on the second phase angle difference and a second frequency shift; and
applying the second frequency shift to the nominal frequency of the first and second AC networks for the second time period;
wherein the second time period ‘T2’ is determined according to the following equation:

$$T_2 = \left(\frac{1}{F_{set2}}\right) * \left(\frac{\delta_{change2}}{360}\right)$$

wherein ’$F_{set2}$’ is the second frequency shift which can be pre-defined and $\delta_{change2}$ is the second phase angle difference.

7. The computer implemented method of claim 6, wherein the second phase angle step change is in an opposite direction to the first phase angle step change.

8. The computer-implemented method of any one of claims 1-4 wherein changing the phase angle of the voltage of at least one of the first and second power converters to balance the power between the first and second electrical poles comprises:

determining a phase angle shift value according to the following equation:

$$\delta_{shift} = \sin^{-1}\left\{\frac{\left(\frac{P_{diff}}{2}\right) * X}{V_1 * V_2}\right\}$$

and then:

applying the determined phase angle shift value to the voltage of one of the first and second power converters;
wherein:

$P_{diff}$ is a difference between a first active power of the first electrical pole and a second active power of the second electrical pole prior to electrically connecting the first AC bus with the second AC bus,
'X' is a total loop reactance between the first and second power converters, and
'V1' and 'V2' are the magnitudes for the first and second AC bus voltages produced by the first and second power converters after electrically connecting the first and second AC buses.

9. The computer implemented method of any preceding claim, further comprising:
controlling the first and/or second power converters to maintain a common neutral electrical current flowing in the neutral arrangement to be substantially zero, by applying a closed loop frequency shift to the nominal frequency of the first and/or second power converters, wherein the closed loop frequency shift is determined based on one of the following:

a first DC current in the first electrical pole and a second DC current in the second electrical pole;
a third current flowing through a grounding circuit associated with the first power conversion means; or
the phase angles of AC voltages on the first and second AC sides of the respective first and second power converters and converter voltage demands determined by constant AC voltage control of the first and second power converters.

10. The computer implemented method of any preceding claim, wherein the command for synchronising the first and second AC networks is received in the event of at least one of:

a fault or failure associated with a dedicated metallic return conductor 'DMR' of the neutral arrangement;
a fault or failure associated with one or more switchgear of the neutral arrangement;
a fault or failure associated with one or more power converters or one or more power transmission means;
initiation of a configuration transition sequence;
identification of a requirement to connect the first and second AC buses;
identification of a requirement to start the bipole power transmission network without the dedicated metallic return conductor 'DMR' of the neutral arrangement; and
initiation of a sequence for testing the bipole power transmission network.

11. The computer implemented method of any preceding claim, wherein at least one of the first and second power converters is configured to operate in a grid forming mode.

12. The computer implemented method of any preceding claim, wherein the bipole power transmission network is a high voltage direct current 'HVDC' power transmission network.

13. The computer implemented method of any preceding claim, wherein the respective AC networks are wind power generation networks.

**14.** A controller for controlling a bipole power transmission network, the controller comprising:

at least one memory; and
at least one processor;
wherein the at least one memory comprises computer-readable instructions which when executed by the at least one processor cause the controller to perform the method of any preceding claim.

**15.** A bipole power transmission network comprising:

a first power conversion means comprising:
first and second power converters having respective first and second AC sides and respective first and second DC sides;
a second power conversion means comprising:
third and fourth power converters having respective third and fourth AC sides and third and fourth DC sides;
a first power transmission means electrically connected between the first and third DC sides and defining a first electrical pole;
a second power transmission means electrically connected between the second and fourth DC sides and defining a second electrical pole; and
a neutral arrangement electrically connected between the first, second, third and fourth DC sides,
wherein the first and second AC sides of the first and second power converters are electrically connected to respective AC networks via respective first and second AC buses, the first and second AC buses being electrically connectable to one another using electrical connection means;
wherein the bipole power transmission network further comprises the controller of claim 14.

100
110
140
110b
130
120b
120
150
110a
120a

Figure 1

210
220
200
231
232
230

Figure 2

PCC$_B$
351
352
353
320
321
321a
322
322a
321b
322b
300
333c
333d
R
331
333
333a
332
333b
311b
312b
R
Idc,1
Idc,G
Idc,2
311
312
311a
312a
310
345b
346b
345
346
345a
346a
PCC$_A$
341
342
VA-1
VA-2
343

Figure 3A

300
PCC$_B$
351
352
353
320
321
321a
322
322a
321b
322b
333c
333d
R
331
333
333a
332
333b
311b
312b
Idc,1
Idc,G
Idc,2
310
311
311a
312
312a
345b
346b
345
346
345a
346a
PCC$_A$
341
342
VA-1
VA-2
343


Figure 3B

400
410
420
430
440
450

Figure 4

500
510
520
522
No
Yes
530
534
532
Yes
No
540
542
544
546
548

Figure 5

600
Vpcc_ref
Vpcc_meas
Ipcc_meas
610
620
controller
ΔIref
630
Itot
Predefined
current limit
Limit Value
Current Limit
640
Idem
650
Ierr
Controller
660
Vreg
670
Vconv_demand
Zconv
Impedance
Compensation
680

Figure 6

700

Frequency
[Hz]
Positive
710
Fset1
0
T1
T2
Time
[sec]
Fset2
Negative
720

Figure 7

800
700
801
802
840
810
850
870
890
Frequency [Hz]
0
T1
T2
Time [sec]
ΔF,OL
ΔF demand
Logic
If Pole 1 is lagging then
ΔF1 = ΔF demand
ΔF2 = 0
Else
ΔF1 = 0
ΔF2 = ΔF demand
end
ΔF1
ΔF2
Freq_ref
Σ
Freq1_Order
Freq2_Order
Fref
VCO_1 (Oscillator)
Sin θ
Cos θ
θ
VCO_2 (Oscillator)
Offshore1SinTh
Offshore1CosTh
Offshore1Theta
Offshore2SinTh
Offshore2CosTh
Offshore2Theta
Idc, G
I_GND_Ref = 0
Controller
ΔF,CL
Trigger Signal
830
820
860
880
895

Figure 8

900
Offshore1SinTh
Offshore1CosTh
Offshore1Theta
Offshore2SinTh
Offshore2CosTh
Offshore2Theta
VCO_1
(Oscillator)
Sin θ
Cos θ
θ
Fref
VCO_2
(Oscillator)
Freq_ref
Freq1_Order
Freq2_Order
Σ
ΔF1
ΔF2
Logic
If Pole 1 is lagging then
ΔF1 = ΔF demand
ΔF2 = 0
Else
ΔF1 = 0
ΔF2 = ΔF demand
end
ΔF demand
ΔF,OL
ΔF,CL
Frequency
[Hz]
Positive
Negative
0
T1
T2
Fset
Time
[sec]
Controller
920
δ 1 meas – δ 2 meas
δ_Ref = 0

Figure 9

1000
1010
Logic
If Pole 1 is lagging then
Vpcc1_ref = Vpcc2_meas
Vpcc2_ref = Vac2_Order
Else
Vpcc1_ref = Vac1_Order
Vpcc2_ref = Vpcc1_meas
end
Vac1_Order
Vac2_Order
Vpcc1_meas
Vpcc2_meas
Trigger Signal
Vpcc1_meas
Vpcc1_ref
Vpcc2_ref
Vpcc2_meas
1020
1040
+
-
1030
Constant Vac Control of Pole1 (grid Forming)
1050
Constant Vac Control of Pole2 (grid Forming)
Vconv1_demand
Vconv2_demand

Figure 10

Europäisches
Patentamt
European
Patent Office
Office européen
des brevets

# EUROPEAN SEARCH REPORT

Application Number
EP 23 21 2132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/223759 A1 (BABU NARAYANAN MITA [GB] ET AL) 13 July 2023 (2023-07-13) * figure 2 * * paragraphs [0002], [0005], [0050], [0053], [0054], [0056], [0057], [0062], [0064], [0065], [0067], [0073], [0075], [0076] * | 1-15 | INV. H02J3/36 H02J3/26 H02M7/493 |
| A | US 2023/327427 A1 (KUMAR AMIT [GB] ET AL) 12 October 2023 (2023-10-12) * abstract * * figures 3,4 * | 1-15 | |
| A | SHUKLA SMIT ET AL: "Control of an Offshore Bipole with AC Interlink Under Dedicated Metallic Return Fault to Improve Energy Availability", 2021 IEEE 19TH INTERNATIONAL POWER ELECTRONICS AND MOTION CONTROL CONFERENCE (PEMC), IEEE, 25 April 2021 (2021-04-25), pages 341-348, XP033916212, DOI: 10.1109/PEMC48073.2021.9432504 [retrieved on 2021-05-14] * abstract * * figures 1,2,6 * | 1-15 | TECHNICAL FIELDS SEARCHED (IPC) H02J H02M |
| A | SUN LINGYU ET AL: "Control Strategy of Voltage Source Inverter Parallel Seamless Switching Based on Droop Control", 2021 24TH INTERNATIONAL CONFERENCE ON ELECTRICAL MACHINES AND SYSTEMS (ICEMS), KIEE & EMECS, 31 October 2021 (2021-10-31), pages 2374-2377, XP034051157, DOI: 10.23919/ICEMS52562.2021.9634415 [retrieved on 2021-12-02] * abstract * * figure 2 * | 1-15 | |

The present search report has been drawn up for all claims

1

| Place of search | Date of completion of the search | Examiner |
|---|---|---|
| Munich | 8 July 2024 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 21 2132

This annex lists the patent family members relating to the patent documents cited in the above-mentioned European search report. The members are as contained in the European Patent Office EDP file on
The European Patent Office is in no way liable for these particulars which are merely given for the purpose of information.

08-07-2024

| Patent document cited in search report | Publication date | Patent family member(s) | Publication date |
| --- | --- | --- | --- |
| US 2023223759 A1 | 13-07-2023 | CN 115552754 A | 30-12-2022 |
| | | EP 3913762 A1 | 24-11-2021 |
| | | US 2023223759 A1 | 13-07-2023 |
| | | WO 2021234145 A1 | 25-11-2021 |
| US 2023327427 A1 | 12-10-2023 | CN 116018737 A | 25-04-2023 |
| | | EP 3965243 A1 | 09-03-2022 |
| | | US 2023327427 A1 | 12-10-2023 |
| | | WO 2022049188 A1 | 10-03-2022 |

EPO FORM P0459

For more details about this annex : see Official Journal of the European Patent Office, No. 12/82